# EUROPÄISCHE PATENTSCHRIFT

(11) **EP 2 059 416 B1**
(45) Veröffentlichungstag und Bekanntmachung des Hinweises auf die Patenterteilung: **26.10.2011**
(21) Anmeldenummer: 07801869.4
(22) Anmeldetag: 24.08.2007
(51) Int. Cl.: B60R 16/03, G06F 1/32

(54) **BUSKOMMUNIKATIONSMANAGEMENT BEI EINEM KRAFTFAHRZEUG MIT MEHREREN, ÜBER EINEN BUS VERBUNDENEN STEUERGERÄTEN**
BUS COMMUNICATIONS MANAGEMENT IN A MOTOR VEHICLE WITH A PLURALITY OF CONTROL DEVICES CONNECTED VIA A BUS
GESTION DE COMMUNICATION PAR BUS SUR UN VEHICULE AUTOMOBILE COMPRENANT PLUSIEURS MODULES DE COMMANDE RELIES PAR UN BUS

(30) Priorität: 29.08.2006 DE 102006040442
(43) Veröffentlichungstag der Anmeldung: 20.05.2009
(73) Patentinhaber: Dr. Ing. h.c. F. Porsche AG, 70435 Stuttgart (DE)
(72) Erfinder: LUZ, Dietmar, 75365 Calw (DE); ROPPEL, Ruediger, 36103 Flieden (DE)
(86) Internationale Anmeldenummer: PCT/EP2007/007441
(87) Internationale Veröffentlichungsnummer: WO 2008/025487

(56) Entgegenhaltungen:
- EP-A2- 0 435 738
- EP-A2- 1 351 433
- FR-A1- 2 852 755

## Beschreibung

Die Erfindung betrifft eine Vorrichtung nach dem Oberbegriff des Anspruchs 1 sowie ein Verfahren nach dem Oberbegriff des Anspruchs 6. Solche Vorrichtungen und Verfahren sind aus dem Serieneinsatz bei Kraftfahrzeugen bekannt,

Moderne Straßenkraftfahrzeuge weisen in der Regel eine Vielzahl von Steuergeräten auf, die über ein Bussystem miteinander vernetzt sind. Die Steuergeräte lass sich dabei einer Komfortelektronik, Infotainmentsystemen, einer Motor- und Triebstrangsteuerung, einer Fahrwerk- und Bremseingriffsteuerung sowie Sicherheitsfunktionen wie einer Crash-Antizipierung zuordnen. Die Gesamtzahl der Steuergeräte pro Fahrzeug erreicht dabei bereits heute eine Größenordnung von 10 bis 100, wobei die Zahl der im Durchschnitt pro Fahrzeug eingebauten Steuergeräte weiter ansteigt.

Addiert man den Strombedarf sämtlicher Steuergeräte, können sich bei neutigen Kraftfahrzeugen Werte von einigen Ampere ergeben, wobei diese Werte noch keinen Strombedarf von Endstufen der Steuergeräte einschließen, mit denen Stellglieder wie Elektromotoren usw. angesteuert werden. Im normalen Fahrzeugbetrieb kann dieser Strombedarf problemlos durch den bei laufendem Verbrennungsmotor a getriebenen Generator gedeckt werden. Bei ruhendem Fahrzeug mit still stehendem Verbrennungsmotor würde dieser Strombedarf jedoch zu einer raschen Entladung des Energiespeichers des Fahrzeugs führen, was die Startfähigkeit des Kraftfahrzeugs mit zunehmender Dauer der Stillstandsphase zunehmend verschlechtert.

Der Stromverbrauch des Fahrzeugs im Ruhezustand ist daher der wichtigste Parameter hinsichtlich der Fahrzeugverfügbarkeit.

Aus der EP 1 351 433 A2 ist gemäß Oberbegriff des Anspruchs 1 eine Energieverwaltung von Netzwerken in Kraftfahrzeugen bekannt, bei welchem ein Netzwerkmanager für alle Teilnehmer eines Netzwerkes erfasst, ob diese in den Zustand ohne Netzwerkkommunikation abschaltbar sind und ob ein anderes Netzwerksegment einen Teilnehmer des abzuschaltenden Netzwerkes benötigt.

Jede Aktivierung von Steuergeräten durch das Bussystem verursacht einen zusätzlichen Stromverbrauch.

Zur Reduzierung des Strombedarfs im Stillstand wird die stromverbrauchende Aktivität der Steuergeräte im Stillstand des Kraftfahrzeugs weitgehend eingeschränkt. Für ein Verständnis der Erfindung reicht es dabei aus, ein aktives Steuergerät von einem nichtaktiven Steuergerät zu unterscheiden. Das Steuergerät braucht auch in seinem nichtaktiven Zustand einen Minimalstrom, um zum Beispiel einen Verlust gespeicherter Daten zu vermeiden. Ein nicht aktives Steuergerät wird im Folgenden auch als schlafendes Steuergerät bezeichnet.

Um eine Verfügbarkeit des Fahrzeugs, also insbesondere die Fähigkeit zum energieintensiven Start des Verbrennungsmotors auch nach längeren Standzeiten zu sichern, wird die Einhaltung von Grenzwerten für den Stromverbrauch im Stillstand gefordert. Ein typischer Grenzwert liegt ungefähr zwei Größenordnungen unter dem Wert des Strombedarfs sämtlicher Steuergeräte im aktiven Zustand. Wenn die Steuergeräte im aktiven Zustand zusammen einen Strombedarf von 5 A aufweisen, sollten sie in der Summe im schlafenden Zustand nicht mehr als 50 mA benötigen.

Bei einem Abstellen eines Kraftfahrzeugs werden Steuergeräte-Routinen ausgeführt, mit denen die Steuergeräte und das Bussystem in den schlafenden Zustand mit erheblich verringertem Stromverbrauch versetzt werden. Eine Batterie mit einer Batteriekapazität von 70 Ah kann den Grenzwert von 50 mA rechnerisch zum Beispiel über 1000 Stunden bereit stellen und besitzt danach immer noch eine Batteriekapazität von 20 Ah.

Dies setzt jedoch voraus, dass sich das komplexe System aus unter Umständen einigen Dutzenden über das Bussystem verbundenen Steuergeräten komplett und störungsfrei in den schlafenden Zustand versetzen lässt. Vernetzte Systeme im Fahrzeug stellen einen komplexen Verbund dar, welcher durch eine große Anzahl von Funktionen gekennzeichnet ist, die bestimmten Steuergeräten zugeordnet sind. Mit steigendem Vernetzungsgrad steigt die Komplexität und die Notwendigkeit eines robusten Kommunikationsdesigns hinsichtlich ungewolltem Kommunikationsaustausch (Aktivierung des Bussystems) sowie einem sicheren Rückkehren in den Ausgangszustand (Busruhe).

Ein fehlerhaftes Verharren eines oder mehrerer Steuergeräte in einem aktiven Zustand führt zu einem erhöhten Stromverbrauch und damit zu einer schnelleren Erschöpfung des Energiespeichers des Kraftfahrzeugs. Als Folge wird die Dauer einer Stillstandsphase, nach der das Kraftfahrzeug noch problemlos gestartet werden kann, eingeschränkt. Mit anderen Worten: Die für den Fahrer eminent wichtige Verfügbarkeit wird im beschriebenen Fehlerfall eingeschränkt.

Vor diesem Hintergrund besteht die Aufgabe der Erfindung in der Angabe einer Vorrichtung und eines Verfahrens der jeweils eingangs genannten Art, mit denen sich der Nachteil einer eingeschränkten Verfügbarkeit vermeiden oder zumindest verringern lässt.

Diese Aufgabe wird bei einer Vorrichtung der eingangs genannten Art durch die kennzeichnenden Merkmale des Anspruchs 1 und bei einem Verfahren der eingangs genannten Art durch die kennzeichnenden Merkmale des Anspruchs 6 gelöst.

### Vorteile

Die Erfindung berücksichtigt, dass ein primärer Fehler in einem Steuergerät wegen der Vernetzung der Steuergeräte dazu führen kann, dass als sekundärer Fehler mehrere Steuergeräte aktiv sind, die eigentlich schlafen sollten.

Dieser sekundäre Fehler tritt als Folge einer sogenannten Weckfähigkeit der Steuergeräte auf. Dabei wird unter einem weckfähigen Steuergerät ein Steuergerät verstanden, das von einem anderen Steuergerät durch ein Weck-Ereignis von dem schlafenden Zustand in den aktiven Zustand umgesteuert werden kann. Weck-Ereignisse sind eingangsseitige Signalwechsel an Steuergerät-Schnittstellen, die zu lokalem Aufwachen des Steuergerätes führen und sich über die Nachrichtenschnittstelle auf das angeschlossene Bussegment fortpflanzen können. Deshalb werden lokale (steuergerätinterne) und bussegmentbezogene (steuergerätexterne) Weck-Ereignisse voneinander unterschieden.

Nachfolgend sollen ausschließlich bussegmentbezogene Weck-Ereignisse betrachtet werden, die zum Wecken des angeschlossenen Bussegments und abhängig von dadurch entstehenden Kommunikationsanforderungen auch zum Aufwachen anderer Bussegmente führen können.

Diese Weckfähigkeit ist bei einigen Funktionen heutiger Kraftfahrzeuge erforderlich, um auch bei ruhendem Kraftfahrzeug eine Kommunikation zwischen verschiedenen Steuergeräten zu ermöglichen. Externe Weck-Ereignisse führen durch ein Signal an einem interrupt-fähigen Eingang zu einem lokalen Hochfahren eines Steuergerätes. In Abhängigkeit von der Signalrelevanz für die restlichen Systeme erfolgt eine Weckfortpflanzung auf das Bussystem und gegebenenfalls weitere Steuergeräte. Wird das Bussystem geweckt, werden die angeschlossenen Steuergeräte hochgefahren. Fordert kein Steuergerät den Busbetrieb, wird sofort wieder die Busruhe eingenommen und die vorher hochgefahrenen Steuergeräte kehren in den Schlafzustand zurück. Wird zum Beispiel über die Fernbedienung ein verriegeltes Kraftfahrzeug geöffnet, sind daran mehrere Steuergeräte beteiligt: Ein Türsteuergerät weckt das Bussystem und, über das Bussystem, ein Bordnetzsteuergerät, das zum Einschalten des Innenlichtes dient.

Ein durch einen primären Fehler fehlerhaft aktives Steuergerät kann daher aber auch weitere Steuergeräte unerwünscht aktiv halten oder wecken, was als Folgefehler oder sekundärer Fehler bezeichnet werden kann. Der Strombedarf erhöht sich daher nicht nur um den Zusatzbedarf des von dem primären Fehler betroffenen Steuergerätes, sondern zusätzlich noch um den Zusatzbedarf sämtlicher von dem sekundären Fehler erfassten Steuergeräte. Dadurch, dass die Erfindung eine Kommunikation auf dem Bussystem unter bestimmten Bedingungen nicht zulässt, kann ein unerwünschtes Aktivhalten und Wecken weiterer Steuergeräte, das jeweils als Folge des primären Fehler erfolgen würde, vermieden werden. Der bei einem primären Fehler eines Steuergerätes auftretende zusätzliche Strombedarf wird daher durch die Erfindung auf den zusätzlichen Strombedarf des von dem primären Fehler betroffenen Steuergerätes beschränkt.

Weitere Vorteile ergeben sich aus Unteransprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: eine Vorrichtung, die aus einem ersten Steuergerät, mehreren zweiten Steuergeräten und einem die Steuergeräte verbindenden Bussystem besteht;
- Fig. 2: eine Funktionsblockdarstellung eines zweiten Steuergeräts; und
- Fig. 3: ein Flussdiagramm als Ausführungsbeispiel eines erfindungsgemäßen Verfahrens.

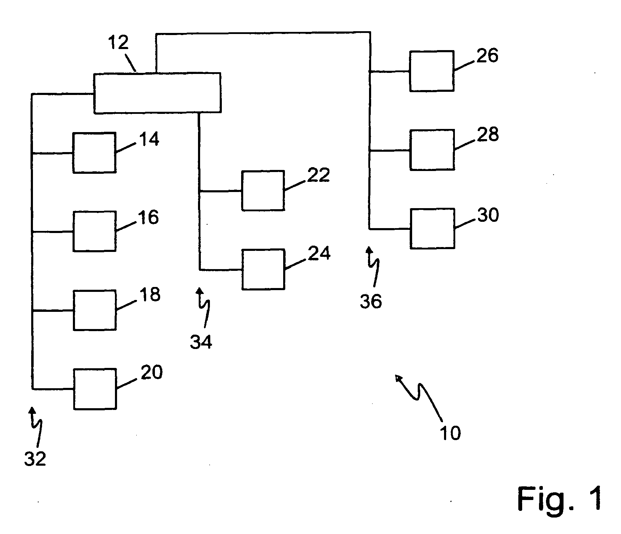

Im Einzelnen zeigt die Fig. 1 eine Vorrichtung 10, die mehrere Steuergeräte 12, 14, 16, 18, 20, 22, 24, 26, 28, 30 eines Straßenkraftfahrzeuges und ein die Steuergeräte 12 - 30 verbindendes Bussystem 32, 34, 36 aufweist. Die Steuergeräte 14 bis 20 sind in der Ausgestaltung der Fig. 1 einer Antriebsstrangsteuerung zugeordnet und an ein Antriebsstrang-Bussegment 32 angeschlossen. Beispiele von Steuergeräten 14 bis 20 sind solche zur Steuerung von Zündungen und/oder Einspritzungen und/oder von variablen Ventilsteuerungen sowie Getriebesteuergeräte. Entsprechend sind die Steuergeräte 22, 24 Infotainment-Funktionen wie Navigationssystemen oder AudioGeräten zugeordnet und an ein Infotainment-Bussegment 34 angeschlossen. Die Steuergeräte 26 - 30 sind in der Ausgestaltung der Fig. 1 Komfort-Funktionen wie Steuerungen von Fensterhebern und/oder Fernbedienungen zur Türöffnung zugeordnet und an ein Komfort-Bussegment 36 angeschlossen.

Die Bussegmente 32, 34 und 36 werden in der Ausgestaltung der Fig. 1 durch das als Gateway-Steuergerät dienende Steuergerät 12 miteinander verbunden. Ein Datenaustausch zwischen einzelnen Bussegmenten erfolgt daher über das Gateway-Steuergerät 12. Dadurch können die einzelnen Bussegmente mit unterschiedlichen, ihren Funktionen angepassten Datenübertragungsgeschwindigkeiten arbeiten. Informationen, die nur zwischen Steuergeräten eines Bussegments ausgetauscht werden, stören dann die anderen Bussegmente nicht. Informationen, die nicht nur lokal auf einem einzelnen Quell-Bussegment benötigt werden, werden über das Gateway-Steuergerät 12 an ein Ziel-Bussegment weitergereicht, was auch als "routen" bezeichnet wird. Das Gateway-Steuergerät 12 führt dazu auch gegebenenfalls erforderliche Anpassungen bei auf unterschiedlichen Bussegmenten unterschiedlichen Datenübertragungsprotokollen durch.

Bei ruhendem Fahrzeug wird das Ziel-Bussegment der Informationen in der Regel schlafen. Ein ruhendes Fahrzeug zeichnet sich zum Beispiel durch eine ausgeschaltete Zündung aus. Das Gateway-Steuergerät 12 oder ein anderes Steuergerät auf dem Bussystem übernimmt in dieser Situation ferner die Rolle eines Powermasters, indem es nach dem Weck-Vorgang eines Quell-Bussegmentes das Ziel-Bussegment weckt. Nach einem Weck-Ereignis hält das Gateway-Steuergerät 12 das geweckte Bussegment für eine vorbestimmte Zeit aktiv und lässt damit eine Kommunikation zwischen Steuergeräten des Quell-Bussegments und Steuergeräten des Ziel-Bussegments zu.

Das Steuergerät 26 sei ein Türsteuergerät, das bei ruhendem und verriegeltem Fahrzeug durch das Signal einer Funkfernbedienung geweckt werde, um eine Türentriegelung zu steuern. Das Steuergerät 14 sei ein Motorsteuergerät, das unter anderem eine Elektro-Kraftstoff-Pumpe steuert. Das Türsteuergerät wird in diesem Fall das Komfort-Bussegment 36 wecken (aktivieren) und das Gateway-Steuergerät 12 wird bei aktiviertem Komfort-Bussegment 36 das Antriebsstrang-Bussegment 32 wecken. Damit ist eine Kommunikation zwischen dem Türsteuergerät 26 und dem Motorsteuergerät 14 möglich. Das Türsteuergerät 26 teilt dem Motorsteuergerät 14 die Türöffnung mit und das Motorsteuergerät 14 reagiert darauf in einer Ausgestaltung mit einem Ansteuern der Elektro-Kraftstoff-Pumpe, um rechtzeitig einen ausreichend großen Kraftstoffstoffdruck für einen anschließenden Start des Verbrennungsmotors zu erzeugen.

Erfolgt der Start dagegen nicht, zum Beispiel weil das Fahrzeug erneut verriegelt wird, kehrt die Vorrichtung im fehlerfreien Fall wieder in einen Ruhezustand zurück, in dem sich sämtliche Steuergeräte und Bussegmente in einem Schlafzustand mit minimalem Stromverbrauch befinden.

Es kann jedoch auch sein, dass ein Steuergerät, zum Beispiel das bereits genannte Türsteuergerät 26 durch eine interne Fehlfunktion nicht wieder in den Schlafzustand zurückkehrt, sondern in dem aktivierten Zustand verharrt und laufend aktiv über das Bussystem 32, 34, 36 und das Gateway-Steuergerät 12 mit anderen Steuergeräten kommuniziert und diese Steuergeräte sowie die beteiligten Busse ebenfalls in einem aktivierten Zustand hält. Dieser Fehler wird im Folgenden auch als erster Fehlertyp bezeichnet. Ein solches im aktiven Zustand mit aktiver Buskommunikation verharrendes Steuergerät 26 kann daher ohne geeignete Gegenmaßnahmen einen hohen Stromverbrauch verursachen.

Ein zweiter Fehlertyp ist **dadurch charakterisiert, dass** ein Steuergerät, zum Beispiel das genannte Türsteuergerät 26, zwar in den Schlafzustand wechselt, aufgrund einer internen Fehlfunktion jedoch immer wieder aktiv wird, so dass das angeschlossene Bussegment, ggf. auch weitere Bussegmente und Steuergeräte, ständig durch Weck-Ereignisse des fehlerhaften Steuergeräts geweckt wird.

Beide Fehler führen zu einer Störung der gewünschten Busruhe. In beiden Fällen erhöht sich der Stromverbrauch im Ruhezustand des Fahrzeugs damit nicht nur um den Stromverbrauch des fehlerhaften Steuergeräts sondern darüber hinaus um den Stromverbrauch sämtlicher unnötig aktiver und/oder unnötig geweckter weiteren Steuergeräte.

Die hier vorgestellte Erfindung vermeidet dies in ihrem Vorrichtungsaspekt dadurch, dass ein erstes Steuergerät dazu eingerichtet ist, eine Kommunikation auf dem Bussystem 32, 34, 36 unter vorbestimmten Bedingungen nicht zuzulassen und zweite Steuergeräte dazu eingerichtet sind, eine Kommunikation auf dem Bus zu unterlassen, wenn das erste Steuergerät die Kommunikation nicht zulässt. Es versteht sich, dass die Ausgestaltung mit dem Türsteuergerät lediglich der Veranschaulichung dient, so dass die Erfindung nicht auf diese Ausgestaltung beschränkt ist und vielmehr Kommunikationen zwischen beliebigen, insbesondere zwischen beliebig vielen, durch das Bussystem verbundenen Steuergeräten beeinflussen kann. Das erste Steuergerät ist bevorzugt das Gateway-Steuergerät 12, das insofern eine Master-Funktionalität für zusätzliche Sonderfunktionen zur Sicherstellung der Busruhe bei fehlerhaftem Verhalten einzelner zweiter Steuergeräte aufweist. Dadurch wird die Fehlertoleranz des Bussystems erhöht. Als zweites Steuergerät kommt jedes der übrigen Steuergeräte 14 bis 30 in Frage. In dem vorgestellten Beispiel des fehlerhaften Türsteuergeräts 26 ist dieses ein typischer Repräsentant eines zweiten Steuergeräts.

Es gibt insbesondere eine Force-Shut-Down Sonderfunktion und eine Prevent-Wake-Up Sonderfunktion. Die Force-Shut-Down Sonderfunktion ist dadurch definiert, dass, sie eine über das Bussystem erfolgende Kommunikation eines Steuergerätes mit anderen Steuergeräten, die bereits besteht, unterbricht. Die Prevent-Wake-Up Sonderfunktion ist dadurch definiert, dass sie einem Steuergerät verbietet, eine Kommunikation mit anderen Steuergeräten über das Bussystem zu eröffnen. Die Sonderfunktionen dienen dazu, die Auswirkungen von Fehlfunktionen in einem zweiten Steuergerät 26 auf weitere zweite Steuergeräte 14 -24, 28, 30 zu verhindern. Die für die Aktivierung der Sonderfunktionen erforderliche Überwachung der Busruhe und Bewertung von Störungen der Busruhe wird zentral im ersten Steuergerät 12 als Master-Steuergerät durchgeführt. Bei Störungen der Busruhe fordert das erste Steuergerät 12 je nach Fehlerfall alle zweiten Steuergeräte 14 - 30 oder einzelne zweite Steuergeräte 26 als Slaves auf, die Sonderfunktionen zu starten. Zur Steigerung der Robustheit ist es vorteilhaft, wenn alle weckfähigen zweiten Steuergeräte 14, 20, 22 und 24, 26 - 30 an einem Bussegment 32, 34, 36 mit den Sonderfunktionen ausgestattet sind. Bei eingeschalteter Zündung sind die Sonderfunktionen nicht relevant, weil dort ohnehin sämtliche Bussegmente 32, 34, 36 aktiv sind und insofern keine Störung der Busruhe vorliegen kann.

Das erste Steuergerät 12 ist insbesondere dazu eingerichtet, eine Kommunikation auf dem Bussystem 32, 34, 36 unter vorbestimmten Bedingungen nicht zuzulassen. Dazu prüft das erste Steuergerät 12 bevorzugt, ob sich das Kraftfahrzeug in einem Ruhezustand befindet. Ein Ruhezustand wird insbesondere dann erkannt, wenn der Verbrennungsmotor abgestellt ist oder wenn zusätzlich die Zündung ausgeschaltet ist.

Ferner erfolgt eine Plausibilisierung des Verhaltens der zweiten Steuergeräte 14-30 beziehungsweise des Bussystems, welche auf unterschiedliche Weise realisiert werden kann. Die Plausibilisierung kann zum Beispiel auf der Basis von Zeiten erfolgen. In einer Ausgestaltung einer zeitbasierenden Plausibilisierung prüft das erste Steuergerät 12, ob die zweiten Steuergeräte 14-30 innerhalb vorbestimmter Zeitspannen nach einem Übergang des Fahrzeugs in einen Ruhezustand ebenfalls in den Ruhezustand übergehen. Sendet ein zweites Steuergerät 26 zum Beispiel fortwährend weiter Nachrichten an andere Steuergeräte 14, 24, 28, 30 über das Bussystem 32, 34, 36, zeigt dies, dass dieses zweite Steuergerät 26 einen Fehler vom ersten Fehlertyp aufweist. Das erste Steuergerät 12 sendet in diesem Fall eine Force-Shut-Down Steuerbotschaft an das fehlerhafte zweite Steuergerät 26 und gegebenenfalls an weitere zweite Steuergeräte 14 - 24, 28, 30 und zwingt diese Steuergeräte in den Ruhezustand.

Die weiteren zweiten Steuergeräte 14 - 24, 28, 30 sind in einer Ausgestaltung dazu eingerichtet, auf einen Empfang der Force-Shut-Down Steuerbotschaft mit einem Überwechseln in einen Schlafzustand mit geringerer Aktivität zu wechseln.

Das Vorliegen eines Fehlers vom zweiten Fehlertyp stellt das erste Steuergerät 12 durch Beobachtung der Steuergeräte an den Bussegmenten fest, indem das Systemverhalten beispielsweise auf der Basis der Zahl der Weck-Ereignisse pro Zeiteinheit bewertet wird. Wenn ein zweites Steuergerät, zum Beispiel das zweite Steuergerät 26, einen Fehler vom zweiten Fehlertyp aufweist, wird sich dies in einer großen Häufigkeit von Weck-Ereignissen abbilden. In einer Ausgestaltung schickt das erste Steuergerät 12 in diesem Fall eine Prevent-Wake-Up Steuerbotschaft an das betroffene zweite Steuergerät 26, die diesem verbietet, eine Kommunikation mit anderen Steuergeräten zu eröffnen.

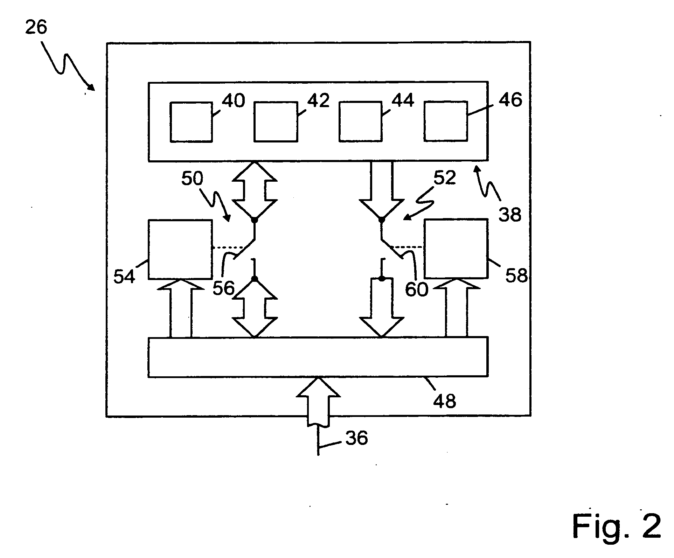

Fig. 2 zeigt eine Funktionsstruktur des Türsteuergeräts 26 als Repräsentant eines zweiten Steuergeräts 14 bis 30. Das zweite Steuergerät 26 weist eine Applikationsschicht 38 mit Softwaremodulen 40 bis 46 auf. Die Softwaremodule 40 bis 46 dienen zur Realisierung der Steuerungsfunktionen, die von diesem Steuergerät 26 im Betrieb oder im Ruhezustand des Fahrzeugs ausgeführt werden sollen. Über eine Kommunikationsschicht 48, die vorzugsweise ebenfalls als Softwaremodul realisiert ist, kann die Applikationsschicht 38 über das zugeordnete Bussegment 36 des Bussystems 32, 34, 36 mit anderen Steuergeräten 12-24, 28, 30 kommunizieren. Im Rahmen einer solchen Kommunikation können zum Beispiel Daten ausgetauscht werden, was in der Fig. 2 durch eine Datenübertragungsstrecke 50 veranschaulicht wird. Die Datenübertragungstrecke 50 ist bei aktiver Applikationsschicht 48 und bereits hergestellter Verbindung zu einem oder mehreren anderen Steuergeräten 12-24, 28, 30 aktiv.

Die Applikationsschicht 38 und die Kommunikationsschicht 48 ist jeweils so beschaffen, beziehungsweise programmiert, dass die eine unabhängig von der anderen betrieben werden kann.

Liegt ein Fehler vom ersten Fehlertyp vor, verharrt das Steuergerät 26 zunächst in einem Zustand mit aktiver Applikation 38 und hält dabei über die Datenübertragungsstrecke 50 die Verbindung zu anderen Steuergeräten 12,14 - 24, 28, 30 aufrecht, was diese an einem Übergang in den Schlafzustand hindert.

Ferner kann die Applikation 38 über eine Wake Up Strecke 52 Wecksignale an andere Steuergeräte 14-24, 28, 30 senden. Liegt ein Fehler vom zweiten Fehlertyp vor, werden die betroffenen anderen Steuergeräte 14-24, 28, 30 und Bussegmente 32, 34, 36 durch Wake Up Signale geweckt, die über die Wake Up Strecke 52 übertragen werden.

Das zweite Steuergerät 26 ist ferner dazu eingerichtet, eine Kommunikation auf dem Bussystem 32, 34, 36 zu unterlassen, wenn das erste Steuergerät die Kommunikation nicht zulässt. In diesem Fall empfängt das zweite Steuergerät 26 eine entsprechende Aufforderung in Form einer Steuerbotschaft vom ersten Steuergerät 12.

Ist die Steuerbotschaft eine Force-Shut-Down Steuerbotschaft reagiert ein Force-Shut-Down Softwaremodul 54 auf den Empfang der Force-Shut-Down Steuerbotschaft mit einem Unterbrechen der Datenübertragung über die Datenübertragungsstrecke 50 zwischen der Applikationsschicht 38 und der Kommunikationsschicht 48. In der Fig. 2 wird dies symbolisch durch den geöffneten Schalter 56 repräsentiert. Als Folge wird die fehlerhaft sendende Applikationsschicht 38 von der Kommunikationsschicht 48 und damit vom Bussystem 32, 34, 36 getrennt. Die Applikationsschicht 38 kann autark weiterarbeiten. Das Bussystem 32, 34, 36 übermittelt jedoch keine Nachrichten mehr von der fehlerhaft sendenden Applikationsschicht 48 im Steuergerät 26 an andere Steuergeräte 14 24, 28, 30, so dass diese in den Schlafzustand mit verringertem Energiebedarf überwechseln können.

Mit anderen Worten: Verhält sich das Bussystem 32, 34, 36 nicht den Vorgaben entsprechend, was sich an einem Nicht-Eintreten der Busruhe zu vorgegebenen Abfragezeitpunkten nach einem Abschalten der Zündung zeigt, erlaubt die Sonderfunktion Force-Shut-Down ein Nichtbeachten der fehlerhaft arbeitenden Applikationsschicht 38 eines zweiten Steuergerätes 26. Als Folge des Nichtbeachtens können die anderen zweiten Steuergeräte 14 - 24, 28, 30 in den Schlafzustand überführt werden oder selbständig in den Schlafzustand wechseln. Die Sonderfunktion Force-Shut-Down ermöglicht damit den restlichen Steuergeräten 14-24, 28, 30 ein Herunterfahren in den Schlafmodus, was zur erwünschten Busruhe und zur Verringerung des sonst stark vergrößerten Strombedarfs des Fahrzeugs führt.

Ist die Steuerbotschaft dagegen eine Prevent-Wake-Up Steuerbotschaft, reagiert ein Prevent-Wake-Up Softwaremodul 58 auf den Empfang der Prevent-Wake-Up Steuerbotschaft mit einem Unterbrechen der Wake Up Strecke 52 zwischen der Applikationsschicht 38 und der Kommunikationsschicht 48. In der Fig. 2 wird dies symbolisch durch den geöffneten Schalter 60 repräsentiert. Mit anderen Worten: Im Steuergerät 26 muss eine Zwischenschicht 58 implementiert sein, die die Weck-Ereignisse aus der Applikationsschicht 38 steuern kann und die durch die Steuerbotschaft Prevent-Wake-Up direkt angesprochen werden kann.

Wie bereits erwähnt wurde, wird das Wecken eines Bussegments 32, 34, 36 durch ein zweites Steuergerät 26 benötigt, um relevante Informationen an andere zweite Steuergeräte 14 - 24, 28, 30 übertragen zu können. Im Fehlerfall kann es vorkommen, dass aufgrund einer Fehlfunktion eines zweiten Steuergeräts 26 das angeschlossene Bussegment 34 ständig durch Weck-Ereignisse geweckt wird. Das erste Steuergerät 12 bewertet diese Weck-Ereignisse und kann daher eine aktive Sperrung der Weckursachen bzw. der Weck-Ereignisse einzelner Steuergeräte 26 am Bussystem 32, 34, 36 durchführen.

Die Bewertung der Weck-Ereignisse beginnt bevorzugt dann, wenn die Zündung ausgeschaltet, der Schlüssel abgezogen (Klemme S aus) und das Fahrzeug verriegelt ist. Dadurch werden die beim Abstellen notwendigerweise erfolgenden Weck-Vorgänge nicht betrachtet. Bei der Detektierung eines ungewollten oder fehlerhaften Verhaltens der Weck-Vorgänge wird die Prevent-Wake-Up Steuerbotschaft ausgegeben. Zur Ausgabe der Prevent-Wake-Up Steuerbotschaft wird der Bus 32, 34, 36 vorzugsweise nicht geweckt. Die Steuerbotschaft wird vielmehr dann gesendet, wenn der Bus 32, 34, 36 wieder durch einen anderen Busteilnehmer geweckt wird.

Bei aktivierter Prevent-Wake-Up Sonderfunktion eines Steuergerätes 26 muss dieses busseitig weiterhin geweckt werden können (CAN-Wake Up). Der Zustand der Funktion wird bevorzugt intern, nach Aktivierung beziehungsweise nach Deaktivierung, in einem nichtflüchtigen Speicher hinterlegt. In der Initialisierungsphase des Steuergerätes 26 wird der aktuelle Zustand aus dem Speicher gelesen und bei aktivem Prevent-Wake-Up die entsprechende Restriktion umgesetzt werden, so dass das Bussystem 32, 34, 36 nicht geweckt wird.

Nach dem Senden der Prevent-Wake-Up Steuerbotschaft dürfen die betroffenen zweiten Steuergeräte 26 den Bus nicht mehr wecken.

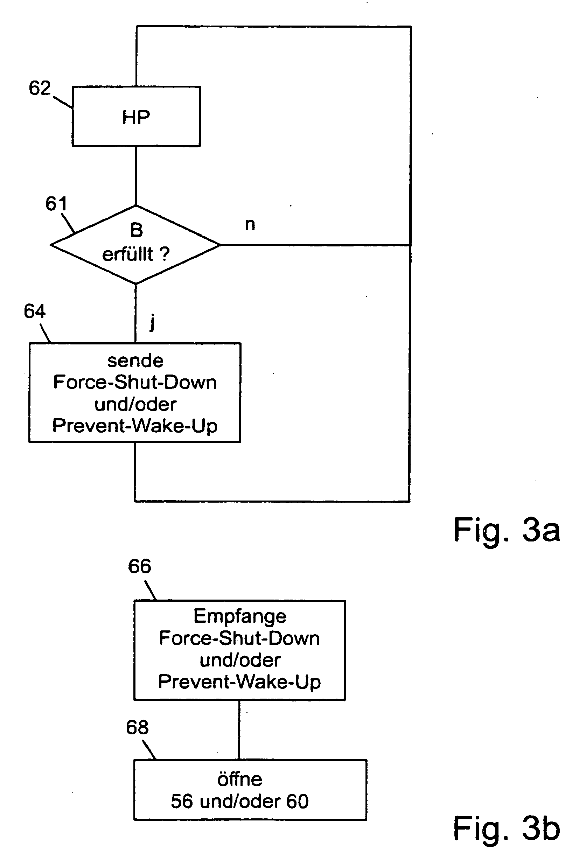

Fig. 3 zeigt ein Ausführungsbeispiel eines erfindungsgemäßen Verfahrens. Dabei betrifft die Fig. 3a einen im ersten Steuergerät 12 durchgeführten Verfahrensteil und die Fig. 3b einen in einem der zweiten Steuergeräte 14-30 durchgeführten Verfahrensteil.

Im Schritt 61 der Fig. 3a, der aus einem übergeordneten Hauptprogramm (HP) 62 erreicht wird, überprüft das erste Steuergerät ob Bedingungen B vorliegen, unter denen eine Kommunikation auf dem Bussystem 32, 34, 36 nicht zugelassen werden soll. Wie bereits erwähnt wurde, wird dazu zumindest unter anderem geprüft, ob sich das Kraftfahrzeug in einem Ruhezustand mit abgestelltem Verbrennungsmotor und ausgeschalteter Zündung befindet. Wird im Schritt 60 ferner eine unerlaubte Busaktivität vom ersten Fehlertyp oder vom zweiten Fehlertyp festgestellt, gibt das erste Steuergerät 12 in einem Schritt 64 die beschriebene Force-Shut-Down Steuerbotschaft und/oder Prevent-Wake-Up Steuerbotschaft aus.

Im Schritt 66 der Fig. 3b, der in einem oder mehreren der zweiten Steuergeräte 14 - 30 durchgeführt wird, wird die Force-Shut-Down Steuerbotschaft und/oder Prevent Wake-Up Steuerbotschaft empfangen, was in einem weiteren Schritt 68 ein Öffnen des Schalters 56 und/oder 58 auslöst.

## Patentansprüche

1. Vorrichtung (10), die aus einem ersten Steuergerät (12) und mehrere zweiten Steuergeräten (14 - 30) eines Straßenkraftfahrzeuges und einem die Steuergeräte (12 - 30) verbindenden Bussystem (32, 34, 36) besteht, wobei eine Aktivität der Steuergeräte (12 - 30) von einer zwischen den Steuergeräten (12 - 30) über das Bussystem (32, 34 36) erfolgenden Kommunikation abhängig ist, wobei das erste Steuergerät (12) dazu eingerichtet ist, eine Kommunikation auf dem Bussystem (32, 34, 36) unter vorbestimmten Bedingungen nicht zuzulassen und die zweiten Steuergeräte (14 - 30) dazu eingerichtet sind, eine Kommunikation auf dem Bussystem (32, 34 36) zu unterlassen, wenn das erste Steuergerät (12) die Kommunikation nicht zulässt, wobei eine der vorbestimmten Bedingungen darin besteht, dass sich das Kraftfahrzeug in einem Ruhezustand befindet, **dadurch gekennzeichnet, dass** dass die zweiten Steuergeräte (14 - 30) weckfähig sind und das erste Steuergerät (12) dazu eingerichtet ist, bei Wecksignalen, die von einem zweiten Steuergerät (26) in der Ruhephase wiederholt über das Bussystem (32, 34, 36) an weckfähige zweite Steuergeräte (14 - 24, 28, 30) gesendet werden, eine Prevent-Wake-Up Steuerbotschaft an das die Wecksignale sendende zweite Steuergerät (26) zu senden, und dieses zweite Steuergerät (26) dazu eingerichtet ist, auf einen Empfang der Prevent-Wake-Up Steuerbotschaft mit einem Unterlassen des Sendens der Wecksignale zu reagieren.

2. Vorrichtung (10) nach Anspruch 1, **dadurch gekennzeichnet, dass** das erste Steuergerät (12) dazu eingerichtet ist, bei einer Kommunikation auf dem Bussystem (32, 34, 36), die von einem fehlerhaft aktiven zweiten Steuergerät (26) aufrecht erhalten wird, eine Force-Shut-Down Steuerbotschaft an zweite Steuergeräte (14 - 30) zu senden, und die zweiten Steuergeräte (14 - 30) dazu eingerichtet sind, auf einen Empfang der Force-Shut-Down Steuerbotsch mit einem Unterlassen der Kommunikation auf dem Bussystem (32, 34, 36) zu reagieren.

3. Vorrichtung (10) nach Anspruch 2, **dadurch gekennzeichnet, dass** die zweiten Steuergeräte (14 - 30) dazu eingerichtet sind, auf einen Empfang der Force-Shut-Down Steuerbotschaft mit einem Überwechseln in einen Schlafzustand mit geringerer Aktivität zu wechseln.

4. Verfahren zum Betreiben eines ersten Steuergerätes (12) und zweiter Steuergeräte (14-30) eines Straßenkraftfahrzeuges und eines die Steuergeräte (12 30) verbindenden Bussystems (32, 34, 36), wobei eine Aktivität der Steuergeräte (12 - 30) von einer zwischen ihnen über das Bussystem (32, 34, 36) erfolgenden Kommunikation abhängig ist, wobei das erste Steuergerät (12) prüft, ob wenigstens eine vorbestimmte Bedingung erfüllt ist und dann, wenn dies bejaht wird, eine Kommunikation auf dem Bussystem (32, 34, 36) nicht zulässt und die zweiten Steuergeräte (14 30) eine Kommunikation auf dem Bussystem (32, 34, 36) unterlassen, wenn das erste Steuergerät (12) die Kommunikation nicht zulässt, wobei das erste Steuergerät (12) als vorbestimmte Bedingung prüft, ob sich das Kraftfahrzeug in einem Ruhezustand befindet, **dadurch gekennzeichnet, dass** das erste Steuergerät (12) bei Wecksignalen, die von einem zweiten Steuergerät (26) in der Ruhephase wiederholt über das Bussystem (32, 34, 36) an weckfähige zweite Steuergeräte (14 - 24, 28, 30) gesendet werden, eine PreventWake-Up Steuerbotschaft an das die Wecksignale sendende zweite Steuergerät (26) sendet, und dieses zweite Steuergerät (26) auf einen Empfang der Prevent-Wake-Up Steuerbotschaft mit einem Unterlassen des Sendens der Wecksignale reagiert.

5. Verfahren nach Anspruch 4, **dadurch gekennzeichnet, dass** das erste Steuergerät (12) bei einer Kommunikation auf dem Bussystem (32, 34, 36), die von einem fehlerhaft aktiven zweiten Steuergerät (26) aufrecht erhalten wird, eine Force-Shut-Down Steuerbotschaft an zweite Steuergeräte (14 - 30) sendet, und die zweiten Steuergeräte (14 - 30) auf einen Empfang der Force-Shut-Down Steuerbotschaft mit einem Unterlassen der Kommunikation auf dem Bussystem (32, 34, 36) reagieren.

6. Verfahren nach Anspruch 5, **dadurch gekennzeichnet, dass** die zweiten Steuergeräte (14 - 30) auf einen Empfang der Force-Shut-Down Steuerbotschaft mit einem Überwechseln in einen Schlafzustand mit geringerer Aktivität zu wechseln.

## Claims

1. An apparatus (10) which is composed of a first control device (12) and a plurality of second control devices (14-30) of a road motor vehicle and a bus system (32, 34, 36) which connects the control devices (12-30), wherein an activity of the control devices (12-30) is dependent on communication taking place between the control devices (12-30) via the bus system (32, 34, 36), wherein the first control device (12) is configured not to permit communication on the bus system (32, 34, 36) under predetermined conditions, and the second control devices (14-30) are configured to refrain from communicating on the bus system (32, 34, 36) if the first control device (12) does not permit communication, wherein one of the predetermined conditions consists in the fact that the motor vehicle is in a state of rest, **characterized in that** the second control devices (14-30) can be woken up and the first control device (12) is configured, in the event of wake-up signals which are repeatedly transmitted by a second control device (26) via the bus system (32, 34, 36) in the rest period to second control devices (14-24, 28, 30) which can be woken up, to transmit a prevent-wake-up control message to the second control device (26) which transmits the wake-up signals and this second control device (26) is configured to react to reception of the prevent-wake-up control message by refraining from transmitting the wake-up signals.

2. Apparatus (10) according to Claim 1, **characterized in that** the first control device (12) is configured, in the event of communication on the bus system (32, 34, 36), which is maintained by an incorrectly active second control device (26), to transmit a force-shut-down control message to second control devices (14-30), and the second control devices (14-30) are configured to react to reception of the force-shut-down control message by refraining from communicating on the bus system (32, 34, 36).

3. Apparatus (10) according to Claim 2, **characterized in that** the second control devices (14-30) are configured to change over to reception of the force-shut-down control message by changing over into a sleep state with relatively low activity.

4. Method for operating a first control device (12) and second control devices (14-30) of a road motor vehicle and of a bus system (32, 34, 36) which connects the control devices (12-30), wherein an activity of the control devices (12-30) is dependent on communication taking place between them via the bus system (32, 34, 36), wherein the first control device (12) checks whether at least one predetermined condition is met and then, if there is a positive response to this, it does not permit communication on the bus system (32, 34, 36), and the second control devices (14-30) refrain from communicating on the bus system (32, 34, 36) if the first control device (12) does not permit communication, wherein the first control device (12) tests, as a predetermined condition, whether the motor vehicle is in a state of rest, **characterized in that**, in the case of wake-up signals which are transmitted repeatedly by a second control device (26) in the rest period via the bus system (32, 34, 36) to second control devices (14-24, 28, 30) which can be woken up, the first control device (12) transmits a prevent-wake-up control message to the second control device (26) which transmits the wake-up signals, and this second control device (26) reacts to reception of the prevent-wake-up control message by refraining from transmitting the wake-up signals.

5. Method according to Claim 4, **characterized in that**, in the event of communication on the bus system (32, 34, 36) which is maintained by an incorrectly active second control device (26), the first control device (12) transmits a force-shut-down control message to second control devices (14-30), and the second control devices (14-30) react to reception of the force-shut-down control message by refraining from communicating on the bus system (33, 34, 36).

6. Method according to Claim 5, **characterized in that** the second control devices (14-30) are configured to change over to reception of the force-shut-down control message by changing over into a sleep state with relatively low activity.

## Revendications

1. Dispositif (10), comprenant une première unité de commande (12) et plusieurs deuxièmes unités de commande (14-30) d'un véhicule automobile et un système de bus (32, 34, 36) reliant les unités de commande (12-30), dans lequel une activité des unités de commande (12-30) dépend d'une communication s'effectuant entre les unités de commande (12-30) par l'intermédiaire du système de bus (32, 34, 36), dans lequel la première unité de commande (12) est conçue pour ne pas autoriser de communication par l'intermédiaire du système de bus (32, 34, 36) dans des conditions prédéterminées et les deuxièmes unités de commande (14-30) sont conçues pour s'abstenir de communiquer par l'intermédiaire du système de bus (32, 34, 36) lorsque la première unité de commande (12) n'autorise pas la communication, dans lequel l'une des conditions prédéterminées consiste en ce que le véhicule automobile se trouve dans un état de repos, **caractérisé en ce que** les deuxièmes unités de commande (14-30) sont aptes à être éveillées et **en ce que** la première unité de commande (12) est conçue pour envoyer, en cas de signaux d'éveil qui sont envoyés de manière répétée par une deuxième unité de commande (26) en phase de repos par l'intermédiaire du système de bus (32, 34, 36) à des deuxièmes unités de commande (14-24, 28, 30) aptes à être éveillées, un message de commande "Prevent-Wake-Up" (Empêcher l'Éveil) à la deuxième unité de commande (26) envoyant les signaux d'éveil, et **en ce que** cette deuxième unité de commande (26) est conçue pour réagir à la réception du message de commande "Prevent-Wake-Up" en s'abstenant d'envoyer les signaux d'éveil.

2. Dispositif (10) selon la revendication 1, **caractérisé en ce que** la première unité de commande (12), lors d'une communication par l'intermédiaire du système de bus (32, 34, 36) qui est effectuée par une deuxième unité de commande (26) active défectueuse, envoie un message de commande "Force-Shut-Down" (Arrêt Forcé) aux deuxièmes unités de commande (14-30), et les deuxièmes unités de commande (14-30) réagissent à une réception du message de commande "Force-Shut-Down" en s'abstenant de communiquer par l'intermédiaire du système de bus (32, 34, 36).

3. Dispositif (10) selon la revendication 2, **caractérisé en ce que** les deuxièmes unités de commande (14-30) sont conçues pour passer à un état de sommeil de plus faible activité lors de la réception du message de commande "Force-Shut-Down".

4. Procédé de mise en fonctionnement d'une première unité de commande (12) et de deuxièmes unités de commande (14-30) d'un véhicule automobile et d'un système de bus (32, 34, 36) reliant les unités de commande (12-30), dans lequel une activité des unités de commande (12-30) dépend d'une communication s'effectuant entre celles-ci par l'intermédiaire du système de bus (32, 34, 36), dans lequel la première unité de commande (12) vérifie si au moins une condition prédéterminée est satisfaite puis, si cela est le cas, n'autorise pas de communication par l'intermédiaire du système de bus (32, 34, 36) et les deuxièmes unités de commande (14-30) s'abstiennent de communiquer par l'intermédiaire du système de bus (32, 34, 36) lorsque la première unité de commande (12) n'autorise pas la communication, dans lequel la première unité de commande (12) teste en tant que condition prédéterminée si le véhicule automobile se trouve dans un état de repos, **caractérisé en ce que** la première unité de commande (12) en cas de signaux d'éveil qui sont envoyés de manière répétée par une deuxième unité de commande (26) en phase de repos par l'intermédiaire du système de bus (32, 34, 36) à des deuxièmes unités de commande (14-24, 28, 30) aptes à être éveillées, envoie un message de commande "Prevent-Wake-Up" à la deuxième unité de commande (26) envoyant les signaux d'éveil, et **en ce que** cette deuxième unité de commande (26) réagit à la réception du message de commande "Prevent-Wake-Up" en s'abstenant d'envoyer les signaux d'éveil.

5. Procédé selon la revendication 4, **caractérisé en ce que** la première unité de commande (12), lors d'une communication par l'intermédiaire du système de bus (32, 34, 36) qui est effectuée par une deuxième unité de commande (26) active défectueuse, envoie un message de commande "Force-Shut-Down" aux deuxièmes unités de commande (14-30), et les deuxièmes unités de commande (14-30) réagissent à une réception du message de commande "Force-Shut-Down" en s'abstenant de communiquer par l'intermédiaire du système de bus (32, 34, 36).

6. Procédé selon la revendication 5, **caractérisé en ce que** les deuxièmes unités de commande (14-30) sont conçues pour passer à un état de sommeil de plus faible activité lors de la réception du message de commande "Force-Shut-Down".
